# EUROPÄISCHE PATENTANMELDUNG

(11) **EP 1 415 843 A2**
(43) Veröffentlichungstag der Anmeldung: **06.05.2004**
(21) Anmeldenummer: 03022357.2
(22) Anmeldetag: 04.10.2003
(51) Int. Cl.: B60K 15/04

(54) **Tankeinfüllstutzen**

(30) Priorität: 31.10.2002 DE 20216928 U
(71) Anmelder: DaimlerChrysler AG, 70567 Stuttgart (DE)
(72) Erfinder: Ackermann, Bernd, 72663 Grossbettlingen (DE); Kempka, Karl-Heinz, 71277 Rutesheim (DE); Mauz, Lothar, 73730 Esslingen (DE); Scheurenbrand, Dieter, 72649 Wolfschlugen (DE); Weil, Manfred, 73614 Schorndorf (DE)

(57) **Zusammenfassung**

Tankeinfüllstutzen (1) mit einer Öffnung zum Einführen einer Zapfpistole und einem Deckel zum Verschließen dieser Öffnung, wobei eine den Tankeinfüllstutzen (1) umschließende ringförmige Hülse (4) vorgesehen ist, die auf den Stutzen (1) aufsteckbar ist.

## Beschreibung

Um ein Betanken des Fahrzeugs mit falschem Kraftstoff nach Möglichkeit zu verhindern, wird üblicherweise auf dem Tankdeckel und/oder der Tankmulde eines Kraftfahrzeugs der zu verwendende Kraftstoff angezeigt.

Während des Tankvorgangs wird jedoch der Tankdeckel mit dem Hinweis auf den Kraftstoff abgeschraubt und ist somit nicht mehr direkt im Sichtfeld. Da auch die Konstruktion der Zapfpistolen eine solche Falschbetankung nicht sicher verhindern hilft, insbesondere bei Dieselfahrzeugen mit aufwendiger Katalysatortechnik, muß die Aufmerksamkeit des Tankenden auf andere Weise erhöht werden, um so mehr, da die Folgen einer Falschbetankung häufig einen Motorschaden und damit hohe Reparaturkosten nach sich ziehen.

Der Erfindung liegt als technisches Problem die Bereitstellung eines Tankeinfüllstutzens zugrunde, der mit vergleichsweise geringem Aufwand realisierbar und für alle Kraftstoffe einsetzbar ist.

Die Erfindung löst dieses Problem durch die Bereitstellung eines Tankeinfüllstutzens mit den Merkmalen des Anspruchs 1. Bei diesem Tankeinfüllstutzen ist eine den Tankeinfüllstutzen umschließende ringförmige Hülse vorgesehen, die auf den Stutzen aufsteckbar ist.

Ein nach Anspruch 2 weitergebildeter Tankeinfüllstutzen zeigt, daß die Hülse einen Hülsenring und senkrecht dazu angeordnet einen Kragen aufweist. Der Hülsenring wird im weiteren als Ring bezeichnet. Ferner weist die Hülse an einer Stelle eine Durchbrechung und radial gegenüberliegend ein scharnierartiges Element auf, so daß sich der Kragen jeweils gegenüberliegend im wesentlichen zwischen scharnierartigen Element und Durchbrechung befindet. Das scharnierartige Element kann unterschiedliche Formen haben. Es kann beispielsweise kleiner oder gleich der Größe des Hülsenrings sein, es kann dickenreduziert sein oder eine Einkerbung enthalten. Um die Hülse auf einen Tankeinfüllstutzen aufstecken zu können, muß die Hülse im Bereich seines scharnierartigen Elements um den dazu nötigen Winkel aufgeweitet werden können. Dazu muß die Hülse bzw. der Hülsenring an dieser Stelle eine entsprechende Flexibilität aufweisen. Diesem Sachverhalt wird mittels Formgebung, Rastelementen und verwendetem Material Rechnung getragen. Die Hülse ist vorzugsweise aus Kunststoff hergestellt.

In einer alternativen Weiterbildung der Erfindung nach Anspruch 3 ist die Durchbrechung der Hülse durch ein an Kragen und Ring beidseitig der Durchbrechung angeordnete Steckverbindung verschließbar.

Besonders vorteilhaft ist, daß diese Hülse, welche mit einem Sichthinweis auf den zu verwendenden Kraftstoff versehen ist, auf allen Tankeinfüllstutzen nachrüstbar ist, unabhängig davon, ob dieser mit einem zusätzlichen Crashring ausgestattet ist oder nicht. Um den nötigen Halt der Hülse auf den jeweiligen Tankeinfüllstutzen zu gewährleisten, sind sogenannte Rastelemente vorgesehen.

Weist ein Tankeinfüllstutzen einen solchen Crashring auf und hat dieser Crashring eine zum Abtropfen des verschütteten Kraftstoffs vorgesehene Auslaufnase, dann zeigt das scharnierartige Element im Ring der Hülse eine Einkerbung, die mit der Nase des Crashrings zusammenwirkt.

Als ein weiterer Vorteil ist die besonders einfache Montage und die kostengünstige Herstellung der Hülse zu nennen. Die Verwendung einer solchen Hülse erspart vorteilhafterweise außerdem die teure Änderung bzw. die Bereithaltung unterschiedlicher Varianten von Tankeinfüllstutzen und Tankdeckeln zur Unterscheidung des Kraftstoffs.

Vorteilhafte Ausführungen sind in den Zeichnungen dargestellt. Dabei zeigt in vereinfachter Darstellung:
- Fig. 1: einen Tankeinfüllstutzen mit Crashring und Hülse, wobei die Hülse ein Rastelement A aufweist
- Fig. 2: einen Tankeinfüllstutzen mit Hülse, wobei die Hülse ein Rastelement B zeigt
- Fig. 3: die Oberseite der Hülse mit Verrastung und Steckverbindung
- Fig. 4: die Hülse im eingebauten Zustand auf dem Tankeinfüllstutzen
- Fig. 5: eine Seitenansicht der Hülse

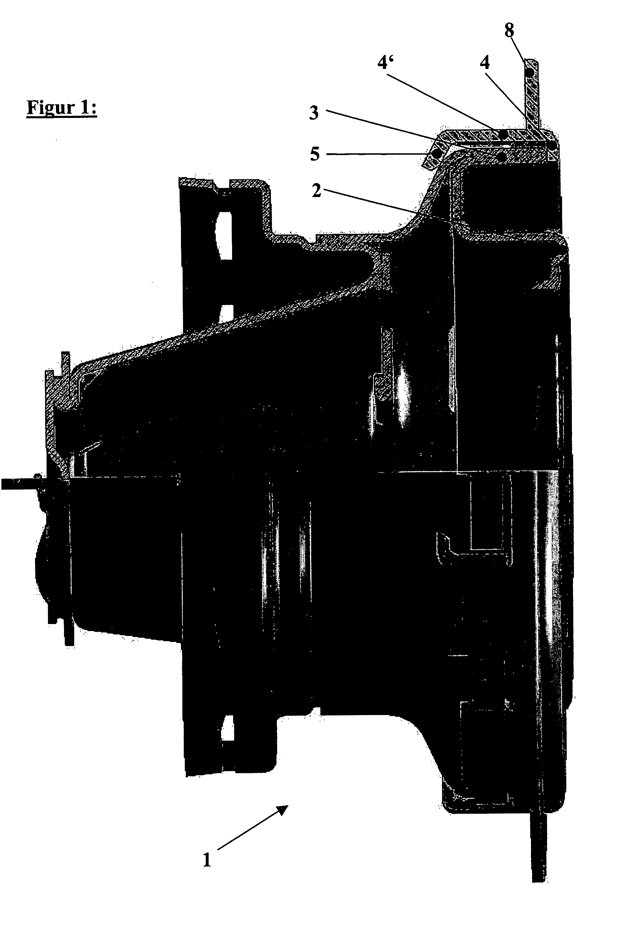

Die obere Seite von Fig. 1 zeigt einen Schnitt durch einen Tankeinfüllstutzen 1 ohne Deckel. Der hier dargestellte Verschlußsockel 2 des Tankeinfüllstutzens 1 weist an seinem oberen Ende in Richtung des Deckels (nicht dargestellt) einen Crashring 3 auf. Auf dem Crashring 3 ist eine Hülse 4 aufgesteckt, die einen Hülsenring 4', einen Kragen 8 und ein Rastelement 5 enthält. Das Rastelement 5 bietet einen zusätzlichen Halt, damit die Hülse 4 in axialer Richtung nicht verschiebbar ist.

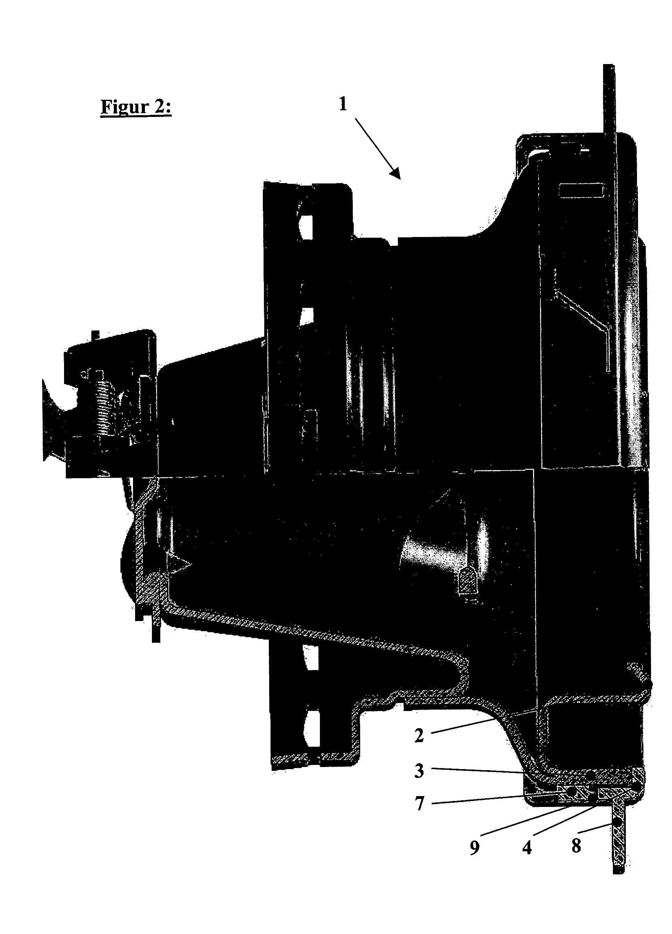

Die untere Seite von Fig. 2 zeigt ebenfalls einen Schnitt durch einen Tankeinfüllstutzen 1 ohne Deckel. Der Übersichtlichkeit halber sind für funktionell gleiche Komponenten dieselben Bezugszeichen verwendet, insoweit wird auf die obige Beschreibung von Fig. 1 verwiesen. Die auf den Crashring 3 aufgesteckte Hülse 4 zeigt einen Teil eines Rastelementes 7 im Hülsenring 4' (der in Fig. 2 nicht extra bezifferte Hülsenring 4' beginnt direkt im Anschluß an den Kragen 8), wobei das Rastelement 7 aus Gründen der Flexibilität nur an einer Seite mit dem Hülsenring 4' in Kontakt steht und an den anderen 3 Seiten eine Unterbrechung 9 aufweist. Das Rastelement 7 dient weiterhin zum Toleranzausgleich in radialer Richtung des Rings, damit es auch bei unterschiedlichen Tankeinfüllstutzen und bei Temperaturunterschieden einen sicheren Halt der Hülse 4 gewährt.

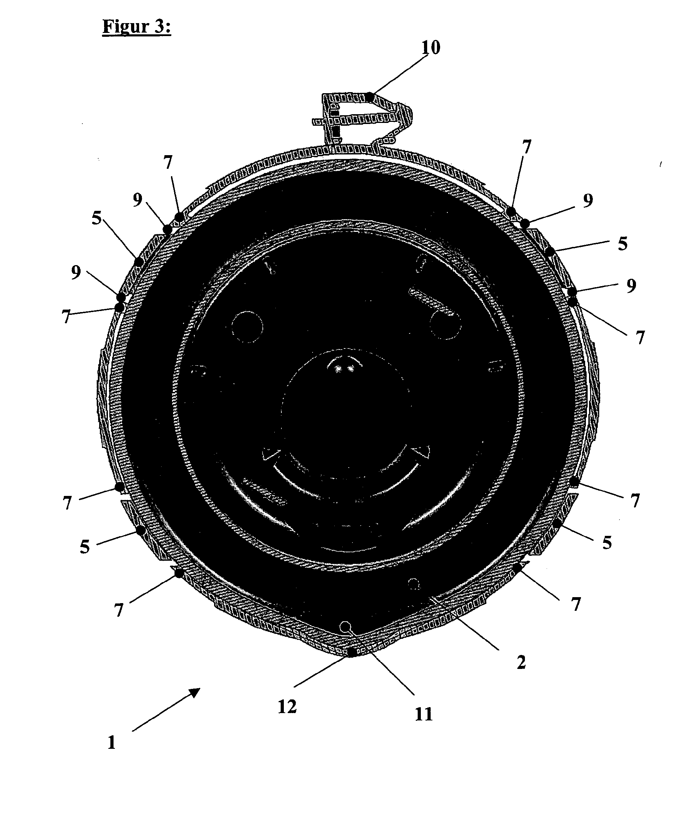

Fig. 3 zeigt die Oberseite eines teilweise im Schnitt dargestellten Einfüllstutzens 1 mit einer auf den Sockel 2 aufgesteckten Hülse 4. Die Hülse 4 stellt die zur Verrasterung geeignete Steckverbindung 10 im geschlossenen Zustand der Hülse 4 und mehrere am Hülsenring 4' angeordnete Rastelemente 5 und 7 mit entsprechenden Unterbrechungen 9 dar. Der am oberen Ende des Sockels 2 angeordnete Crashring zeigt eine Nase 11 zum Auslaufen des verschütteten Kraftstoffs. Unterhalb der Nase 3 befindet sich ein scharnierartiges Element 12, welches zur Montageerleichterung dient. Um die Ausbuchtung durch die Nase 11 entsprechend einzubeziehen, kann das scharnierartige Element 12 eine Einkerbung enthalten.

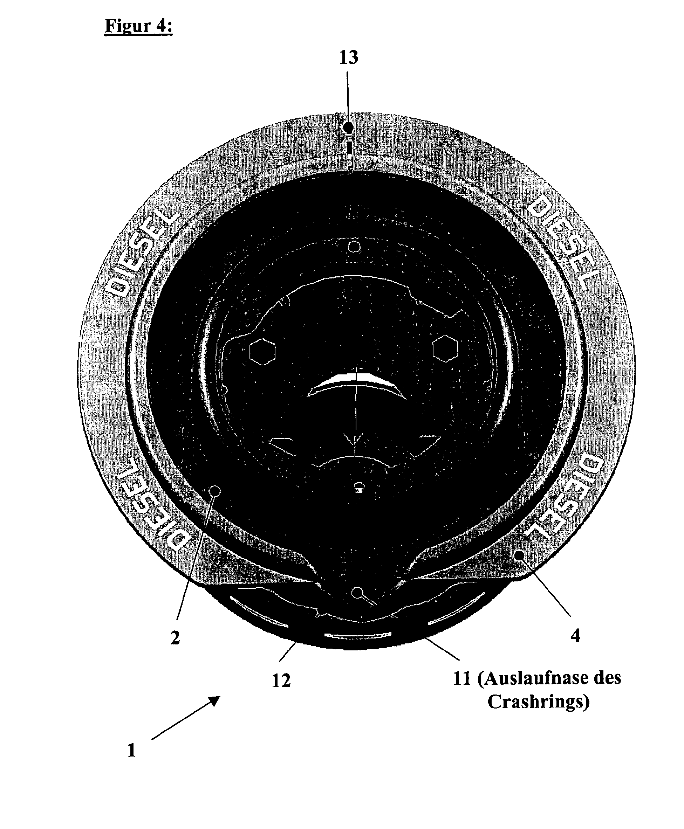

Fig. 4 zeigt die Draufsicht auf einen Sockel 2 eines Tankeinfüllstutzen 1 mit aufgesteckter Hülse 4. Wie in Fig. 2 bereits dargestellt, zeigt der am oberen Ende des Sockels 2 angeordnete Crashring eine Nase 11 zum Auslaufen des verschütteten Kraftstoffs. Unterhalb der Nase 3 befindet sich das scharnierartige Element 12. Um die Ausbuchtung durch die Nase 11 entsprechend einzubeziehen, kann das scharnierartige Element 12 eine Einkerbung enthalten. Radial gegenüberliegend weist die Hülse 4 eine Unterbrechung 13 auf, an deren jeweiligen Enden die entsprechen Steckverbindungselemente (nicht dargestellt) 10 angeordnet sind. Die auf der bevorzugt farblich eingefärbten Hülse 4 aufgebrachte Beschriftung mit dem zu verwendenden Kraftstoff soll eine Verwechslung zusätzlich ausschließen.

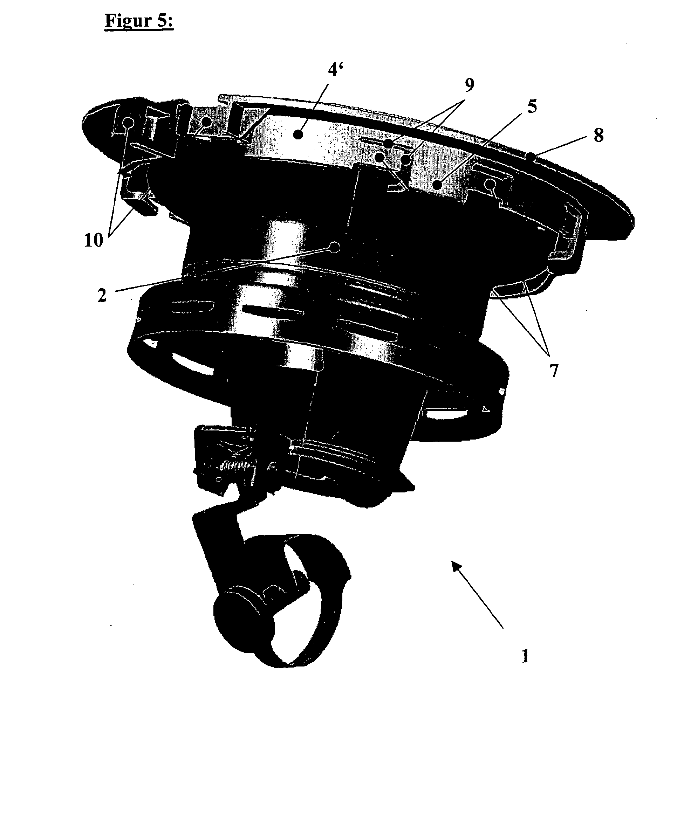

Fig. 5 zeigt die Seitenansicht eines Einfüllstutzens 1 mit der auf dem Sockel 2 aufgesteckten Hülse 4, wobei der Übersichtlichkeit halber für funktionell gleiche Komponenten dieselben Bezugszeichen verwendet sind und insoweit auf die obigen Beschreibungen der Fig. 1 bis 4 verwiesen werden kann. Das in Fig. 2 und 3 gezeigte Rastelement 7 zeigt in dieser Darstellung recht anschaulich die im Hülsenring 4' vorgesehenen Unterbrechungen 9 auf. Auch die jeweiligen, nach dem Schlüssel/Schloß-Prinzip funktionierenden Elemente der Steckverbindung 10 sind hier nochmals sichtbar dargestellt.

## Patentansprüche

1. Tankeinfüllstutzen (1) mit einer Öffnung zum Einführen einer Zapfpistole und einem Deckel zum Verschließen dieser Öffnung,
**dadurch gekennzeichnet,**
**dass** eine den Tankeinfüllstutzen (1) umschließende ringförmige Hülse (4) vorgesehen ist, die auf den Stutzen (1) aufsteckbar ist.

2. Vorrichtung nach Anspruch 1,
**dadurch gekennzeichnet,**
**dass** die Hülse (4) einen Ring (4') und senkrecht dazu angeordnet einen Kragen (8) aufweist, wobei die Hülse (4) an einer Stelle eine Durchbrechung (13) und radial gegenüberliegend ein scharnierartiges Element (12) aufweist, so daß sich der Kragen (8) jeweils gegenüberliegend im wesentlichen zwischen scharnierartigen Element (12) und Durchbrechung (13) befindet.

3. Vorrichtung nach Anspruch 2,
**dadurch gekennzeichnet,**
**dass** die Durchbrechung (13) der Hülse (4) durch ein an Kragen (8) und Ring (4') beidseitig der Durchbrechung (13) angeordnete Steckverbindung (10) verschließbar ist.

4. Vorrichtung nach Anspruch 1,
**dadurch gekennzeichnet,**
**dass** das scharnierartige Element (12) eine Einkerbung aufweist, die mit einer Nase (11) am Einfüllstutzen (1) zusammenwirkt.
